# EUROPEAN PATENT APPLICATION

(11) **EP 1 191 675 A1**
(43) Date of publication of application: **27.03.2002**
(21) Application number: 01100875.2
(22) Date of filing: 16.01.2001
(51) Int. Cl.: H02P 1/44

(54) **Device for obtaining a temporary increase in the starting characteristics of a single-phase electric induction motor**

(30) Priority: 20.09.2000 IT MI200529
(71) Applicant: SISME IMMOBILIARE S.p.A., 22077 Olgiate Comasco (Como) (IT)
(72) Inventor: Pedretti, Roberto, 22100 Como (IT)
(74) Representative: Ripamonti, Enrico, Dr. Ing.

(57) **Abstract**

A device for obtaining a temporary increase in the starting characteristics of a single-phase electric induction motor, in particular an asynchronous induction permanent split capacitor motor, comprising a stator (S) having a main winding (1) and an auxiliary winding (2), there being provided a capacitor (3) with one terminal always connected to the main winding (1), and the other to the auxiliary winding (2); a controlled electrical connection member (15) is provided arranged to define two connection stages for that end (17) of the auxiliary winding (2) not connected to the capacitor. The first stage is implemented on starting the motor in order to provide this latter with a high static torque, the second stage being implemented later to ensure quiet operation of the motor.

## Description

The present invention relates to a device in accordance with the introduction to the main claim, and in particular to a device for obtaining a particular connection scheme for the windings of a single-phase electric induction motor, such as to vary the configuration of these connections in order to obtain an increase in the motor starting characteristics.

In particular, but not exclusively, the invention is usable in electric motors of pumps for dishwashers.

Domestic and certain other appliances to be powered by a single-phase electrical alternating current line are known to be generally equipped with a single-phase electric motor if a torque has to be produced on a rotary shaft. A widely used electric motor of this type is the "asynchronous induction" motor operating in the single-phase version.

This type of motor comprises a rotor and a stator; this latter presents an electric winding, known as the "main winding", connected generally directly to the source of alternating voltage. This motor also requires at least one further stator winding, known as the "auxiliary winding", which can be connected to the preceding in a plurality of possible ways. The reason for this is to simulate the operation of a two-phase motor (which is powered by two voltage waves offset by 90 degrees) and enables the single-phase motor to generate a certain static torque unobtainable with a single winding.

For some applications, for example in certain household electrical appliances such as dishwashers, air conditioners and fans, it is very important for the single-phase motor driving the pump or fan blade to maintain a low noise level (for example to enable the appliance to be used during the night) and to present a fairly good electrical efficiency.

Moreover, with particular reference to the motor-driven pumps used in dishwashers, there is also the problem of ensuring that the pump starts even under critical conditions, for example if initial incrustation is present between the faces of the usual rotary seal, such incrustation generally occurring after prolonged inactivity of the appliance. This problem can be overcome only by providing a high motor starting torque, which can however give rise to an undesirable increase in the noise generated by it during operation and an increase in the maximum voltage across the motor components, which itself can result in high electrical stresses and possible structural yielding.

Generally to satisfy these requirements for the aforesaid applications (for example in dishwashers) the aforesaid single-phase asynchronous induction electric motor with a permanently connected capacitor (or PSC motor, i.e. permanent split-capacitor motor) is used.

A usual PSC motor comprises two windings positioned in the stator at 90 electrical degrees apart, of which the "auxiliary" winding is connected in series with a capacitor to obtain phase displacement of the current flowing through it relative to the current flowing through the main winding (a necessary condition for generating a starting torque and for good operation at rated load).

The PSC motor enables the windings to be dimensioned (number of turns and spatial distribution of the windings) such as to present a good balance between the magnetic fields generated by each of them, with consequent reduction in magnetic noise and vibrations produced especially at a frequency of 100 Hz (if powered at 50 Hz), but only if the ratio of motor starting torque to working torque does not exceed determined values. For each family of motors having a given constructional geometric dimension (such as the outer diameter of the stator) there therefore exists a determined ratio of starting torque to working torque beyond which it is not possible to design a PSC induction motor with magnetic field balancing and hence with a low magnetic noise level, plus an efficiency compatible with the use for which the motor is intended.

An object of the present invention is therefore to provide a device for a PSC induction motor which enables the vibration and noise level during motor operation to be reduced, while presenting a good level of electrical efficiency together with a high static torque on starting.

A further object is to provide a device of the stated type, in particular for a dishwasher pump motor, which ensures that the pump starts even when under particularly critical starting conditions, particularly after a long period of inactivity.

A further object is to provide a device of the stated type, in particular for an electric motor applied to a household electrical appliance, which enables the motor efficiency to be increased compared with that of the same motor not provided with the device; this is particularly important for energy saving problems (i.e. Ecolabelling) in household electrical appliances.

A further object is to provide a device of the stated type which also offers electrical protection to the various motor components by reducing the maximum voltage arising across its windings, with consequent reduction in the electrical stressing of the insulation members and resultant short circuiting.

These and further objects which will be apparent to the expert of the art are attained by a device in accordance with the accompanying claims.

The present invention will be more apparent from the accompanying drawing, which is provided by way of non-limiting example and in which:
Figure 1 shows a particular connection scheme for the stator windings of a PSC induction motor into which a first embodiment of a device of the invention is inserted;
Figure 2 is a torque/rotational speed (rpm) graph showing two possible curves A and B relative to the two connection stages, namely starting and normal working respectively, of the windings of the motor of Figure 1;
Figure 3 shows the graphical evolution of the electromechanical torque/rotational speed characteristic of the motor of Figure 1, with the device (15) operating such as to switch the connections in the starting stage;
Figure 4 shows a second embodiment of the device of Figure 1;
Figure 5 shows a third embodiment of the device of Figure 1; and
Figure 6 shows a further different embodiment of a device of the invention applied to a connection scheme for the static windings of an electric motor analogous to that of Figure 1.

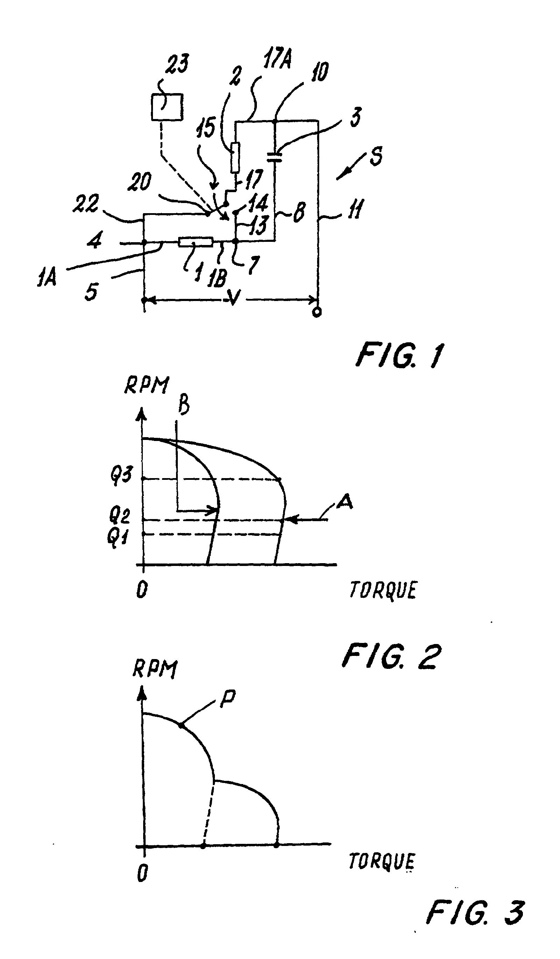

With reference to said figures and in particular to Figure 1, this latter shows the electrical scheme of a stator S of a single-phase induction motor of PSC type, with the windings arranged in a manner suitable for switching the connections in accordance with the invention. This stator comprises a main or running winding 1, an auxiliary or starting winding 2 and a capacitor 3.

The main winding 1 comprises two ends or terminals 1A and 18; it is connected to a node 4 (by the end 1A) from which there extends a branch 5 connected to an electrical power source, for example a fixed electrical supply mains. The winding 1 is also connected, by its end 1B, to a node 7 to which there is connected a branch 8 containing the capacitor. The branch 8 is connected to a node 10 from which there extends a branch 11 connected to the aforesaid mains. From the node 7 there extends a branch 13 terminating in a node 14 connectable via electrical connection means 15 to one end or terminal of the auxiliary winding 2, its other end or terminal 17A being connected to the node 10. The connection means 15 are also arranged to cooperate, when in a different working position, with a node 20 in which a branch 22 connected to the node 4 terminates.

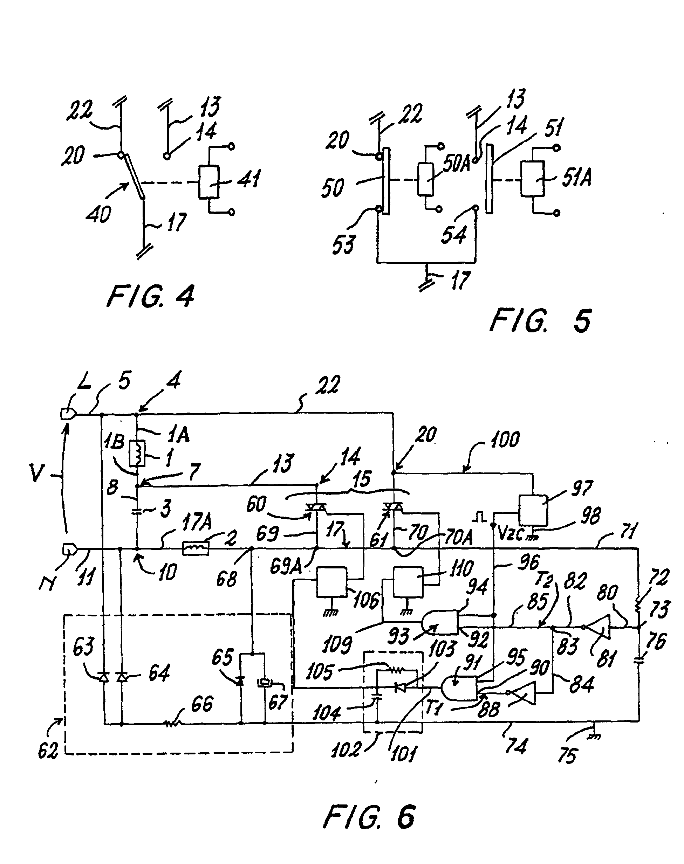

The connection means can comprise a connection member of electromechanical type, such as a current relay, voltage relay, PTC or other switch or change-over switch, or of electronic type, i.e. using static switches (as shown for example in Figure 6). These connection means 15 can be timed (as in the case of a relay) and are under the control action of a member 23 which can be: a motor operation control circuit (known per se); a particular circuit arrangement which powers the means 15, for example in the form of a relay, when the motor start command is given; or a direct command associated with a motor activation element (switch) etc.

The connection means 15 or the control member 23 or both can be physically located on the motor (for example on the motor-driven pump of a dishwasher) or be located in a suitable position within the appliance, for example said dishwasher, or, as a further alternative, be integrated into an electronic circuit (main board) controlling all the functions of the dishwasher. This latter possible location of the members and means 15 and 23 allows substantial constructional savings in the motor and in the device for its control, and also allows possible circuit variations such as to eliminate the known problems which exist if the control member 23 is not integrated into said circuit.

The control member 23 and/or the connection means 15 enable these means to be positioned in a particular working position on starting the motor. Subsequent to this latter, in fact, the member 23 sets the electrical connection means 15 (for example a mechanical change-over switch) in the position in which it connects the end 17 of the winding 2 to the node 4. When in this position, following connection of the motor to the mains (in known manner), mains voltage is applied across the secondary winding 2 which in this stage acts as the main winding, being connected in parallel to the supply mains and hence, in known manner, creates the "starting impetus" for the motor. With the switch in the aforesaid position, the motor is able to produce a starting torque of at least 3-4 times that obtained when the switch connects the node 14 to the end 17.

After a precise time period, for example corresponding to that required for the motor to attain 70-80% of its normal working speed (or a suitable percentage of this speed), the member 23 moves the switch onto the node 14 to connect the auxiliary winding 2 in parallel with the capacitor 3, causing the winding 1 to again act as the main winding. The motor continues to operate in known manner. The switch can also be shifted by the member 23 when the member 23 senses a particular value of the current absorbed by the motor or the attainment of other motor operating conditions monitored in any known manner.

In this respect it should be noted that a basic characteristic of the control member 23 is that it switches the change-over switch from the node 20 to the node 14 only when there is no longer any current circulating through the winding 2, in order to prevent pulsating currents circulating through the capacitor 3 which with time could irreparably damage the motor. In other words the member 23 must switch the connection means 15 from the node 20 to the node 14 such that the voltage across the ends of the capacitor 3 undergoes no discontinuity of any kind, in order to prevent said pulsating currents arising through the capacitor 3.

This control member must therefore evaluate the exact moment of switch-over by current measurement means comprising passive components (resistors, capacitors, thermistors, PCT or NCT devices, current or voltage sensors) suitably inserted into the circuit, or by means of electronic components connected to the end 17, or by providing suitable delays.

As already stated, the connection means can be of electromechanical type. Two embodiments of these means are shown in Figures 4 and 5 in which parts corresponding to the already described parts of Figure 1 are indicated by the same reference numerals.

In Figure 4 the means 15 are a switch or change-over switch 40 connected to a relay 41 (controlled in its turn by a member 23). This solution has two operative variants: a) in a first variant (analogous to that described with reference to the solution of Figure 1), the relay 41 is not energized and the switch 40 is closed onto the node 20; in this position the motor starts. On energizing the relay 41 the switch 40 positions itself onto the node 14, in which case the motor operates normally; b) in the second variant, when the relay 41 is not energized the switch 40 is closed onto the node 14. When the motor is started, the relay 41 is energized and switches the switch 40 onto the node 20. When the motor is moving, the relay becomes de-energized and the single-phase returns to the node 14.

In Figure 5, the member 15 is defined by a pair of contactors 50 and 51 subjected to a corresponding relay 50A and 51A controlled by the member 23. These contactors are arranged to close onto the node 20 and the node 14 respectively, and onto corresponding nodes 53 and 54 connected to the terminal 17 of the auxiliary winding 2.

The connection means 15 represented in Figure 5 can be driven by a succession of commands fed to the relays 50A and 51A of the member 23 but with the proviso that before energizing each relay it must be verified that the other relay is de-energized.

For this purpose the control member 23 evaluates the presence of current in the member 17 by means of the aforesaid sensing components or means, and acts suitably on the relays 50A and 51A to regulate the time necessary for passage of each relay from its rest condition to its working condition.

As already stated, the connection means 15 can be of electronic type. This solution is shown by way of example in Figure 6, in which parts corresponding to those already described are indicated by the same reference numerals. In this figure the electrical scheme of a stator 5 is shown connected to a circuit configuration which drives the connection means 15.

The "electronic" embodiment of the device of the invention must however ensure that high pulsating currents are not generated in the branch 8 into which the capacitor 3 is connected. This is achieved by correct activation of static switches 60 and 61 representing the change-over means 15.

In the embodiment of Figure 6, the circuit arrangement comprises a power supply circuit 62 defined by components (diodes 63, 64, 65, a resistor 66 and a capacitor 67) arranged to provide half-wave rectification of the mains voltage V. This power supply circuit is connected to the branch 17 at a node 68. This branch is connected to the static switches 60 and 61 (for example triacs) via branches 69 and 70 terminating in the nodes 69A and 70A located on the branch 17. From the node 70A there extends a branch 71 comprising a resistor 72 and terminating in a node 73. From this latter there extends, terminating at the power supply circuit 62, a branch 74 connected to the reference node 75 and containing a capacitor 76. This latter and the resistor 72 define a delay in the switching of the static switches, as described hereinafter.

From the node 73 there extends a branch 80 terminating in an inverter 81 (or NOT logic gate) the output 82 of which is connected to a node 83; from this there extend branches 84 and 85 connected respectively to a second inverter 88 the output of which is connected to a first input 90 of a first AND logic gate 91, and to a first input 92 of a second AND logic gate 93. The second input 94 of this latter and the second input 95 of the AND gate 91 are both connected to a branch 96 originating from a functional block 97 connected to the node 98, at the same potential as the node 75, and to the node 20 via a branch 100. This block 97 generates along the branch 96 a positive current pulse of set duration each time the voltage across the ends of the static switch 61 passes through zero: this happens when the two following circumstances occur:
1) on passage through zero of the alternating voltage powering the motor, if the static switch 61 is open, i.e. not traversed by current;
2) on passage through zero of the current flowing through the static switch 61, if this is closed, i.e. traversed by current.

The output 101 of the first AND logic gate 91 is connected to a circuit branch 102 (comprising a diode 103, a capacitor 104 and a resistor) connected in its turn to a usual driver circuit 106 for the static switch 60. The output 109 of the second AND gate 93 is instead connected directly to a driver circuit 110 (known per se and therefore not described) for the static switch 61.

The circuit configuration comprising the logic parts 81, 88, 91, 93 and the components connected to it define the control member 23 for the switching means 60 and 61, said configuration also being providable in that circuit configuration (main board) which controls the operation of the household electrical appliance, for example a dishwasher, to which the invention is applied.

When the motor is to be activated, its energization closes the switch 61. After a required time delay set by the resistor 72 and capacitor 76, the switch 61 is opened and the switch 60 closed.

More specifically, on activating the device the voltage across the capacitor 76 grows in accordance with an exponential law; until this voltage exceeds the threshold level of the inverter 81, the signal T2 present at the output 82 remains high, whereas the signal T1 at the output of the inverter 88 remains low. When the voltage across the capacitor 76 exceeds the threshold level of the inverter 81, T2 becomes low whereas T1 becomes high.

On activating the device the functional block 97 also operates to generate a positive square-wave pulse of voltage Vzc the first time the voltage across the switch 61 passes through zero. This pulse is fed to the logic gates 91 and 93 which receive the signals T1 and T2 respectively. Hence, as T2 is high (and T1 low) on activation and as the pulse Vzc is present along the branch 96, the second logic gate generates as output a signal which enables the driver circuit 110 to close the static switch 61 for the first time. Subsequent passages through zero of the current in the static switch 61 enable the switch to be reswitched while the signal T2 remains high, given that the pulses Vzc are generated at each passage of the static switch current through zero.

Likewise the presence of the pulse Vzc due to the passage through zero of the voltage across the static switch 61, when this latter is open and T1 is high (T2 is low), allows the logic gate 91 to enable the driver circuit 106 to close the static switch 60. Passage of the signals T2 and T1 from high to low and vice versa is obtained by the time delay set by the capacitor 76 and resistor 72. Another important function which the control circuit 23 for the static switches has to accomplish is to ensure that closure of the switch 60 occurs only when the switch 61 is reliably open; this ensures that the voltage across the capacitor 3 has no discontinuities of any kind which would occur if the two switches were closed simultaneously, so preventing high pulsating currents passing through said capacitor, with well known drawbacks.

The AND gate 91 accomplishes this function: at the output 101 of this gate there is in fact the signal used to control the driver circuit 106 of the static switch 60 only on initial manifestation of the positive pulse Vzc concurrently with passage of the signal T1 to high level. The circuit branch 102 then enables the high signal level to be maintained at the input of the driver circuit 106, and hence the command to the static switch 60 given that the block 97 continues to generate pulses Vzc simultaneously with the passage through zero of the alternating feed voltage when the static switch 61 is open.

By using the device of the invention, which comprises the electrical connection means 15 disposed between the main winding 1 and the secondary winding 2 of the stator S, a motor is obtained which during the first connection stage is much more powerful than motors not provided with the device of the invention, with an increase in the entire torque/rpm characteristic, as shown in Figure 2. In fact, with reference to this latter, it can be seen that with the connection means 15 in the first connection stage (connecting the node 20 to the end 17) a curve A is obtained according to which, for equal rpms Q1, Q2, Q3..., torques are obtained which are much higher than those obtainable by the curve B representing the second connection stage of the means 15 (in which these connect the end 17 to the node 14). Of this possible motor operating characteristic only the initial part characterised by high static torque is meant to be used.

The effective evolution of the torque/rpm characteristic of Figure 2 is shown in Figure 3 where the working point P is also shown.

The motor is obviously designed to operate under normal working with the connection means 15 positioned in the second connection stage (to obtain good efficiency, magnetic field balance, reduced noise), it consequently not being possible to prolong beyond certain limits its operation with the means 15 in the first connection stage, used only for achieving high static torques, in that considerable heating could occur in the windings, with risk of damage.

By virtue of the invention, the conditions presented by the motor with the means 15 in the first connection stage can be utilized, and in particular the higher level of starting torque, for only a very short period, of the order of a second or a fraction thereof, capable of making the element coupled to the motor shaft rotate especially in its application to pumps for household electrical appliances and air conditioners/fans. This means for example that starting of the usual pump of a dishwasher can be guaranteed even in the presence of initial incrustation between the two faces of the rotary seal, such incrustation occurring following lengthy periods of pump inactivity.

The invention is particularly important for certain applications, especially in the household electrical appliance sector, where the described operating characteristics are required at low cost.

In particular, a very low motor noise at low frequency (100 Hz) is very important in the household appliance sector and in particular for dishwashers, which are often operated in a normally inhabited environment or at night.

In this respect, the particular motor winding configuration obtainable with the device of the invention enables the windings to be suitably designed with optimisation of electromagnetic balance at the operating point, with consequent reduction in vibration and noise at mains power frequency (100 Hz for a 50 Hz mains), which is particularly annoying as it is amplified by the appliance structure. This is achieved by designing the stator windings such as to balance the respective magnetic fields at the motor operating point.

Other merits of the invention include the facility for increasing the electrical efficiency of the motor: this is particularly important for Ecolabelling problems of household electrical appliances and in the strong reduction in the maximum voltages arising between the windings, with consequent reduction in electrical stress in insulations and their possible breakdown (short-circuiting).

The present invention can be applied to various household electrical appliances and also to other sectors such as drink dispensing pumps, ice-cream dispensing machines or pumps and air compressors in general.

## Claims

1. A device for obtaining a temporary increase in the starting characteristics of a single-phase electric induction motor, in particular an asynchronous induction motor, comprising a stator (S) having a main winding (1) and an auxiliary winding (2), there being provided a capacitor (3) always connected to one end (1B) of the main winding (1), and to a first end (17B) of the auxiliary winding (2), **characterised by** comprising controlled electrical connection switch-over means (15) arranged to define two connection stages for the second end (17) of the auxiliary winding (2), in the first stage this end (17) being connected to the electrical supply mains, in the second stage it being connected to and in parallel with the capacitor (3), said first stage being implemented on starting the motor in order to provide this latter with a high static torque, said second stage being implemented later to ensure quiet operation of the motor.

2. A device as claimed in claim 1, **characterised by** comprising control means (23) for controlling the switch-over means (15) and for effecting passage from the first to the second connection stage in such a manner as to prevent the onset of pulsating currents through the capacitor (3).

3. A device as claimed in claim 1, **characterised in that** the controlled electrical connection means (15) comprise at least one connection member of electromechanical type such as a change-over switch (40; 50, 52), a current relay, voltage relay or the like.

4. A device as claimed in claim 3, **characterised in that** each mechanical connection member (40; 50, 51) is subjected to a relay (41; 50A, 51A) controlled by the control means (23).

5. A device as claimed in claim 4, **characterised by** comprising two mechanical connection members (50, 51), each subjected to its own relay (50A, 51A), the two relays being energized at different times such that one relay is energized while the other is de-energized.

6. A device as claimed in claim 1, **characterised in that** the electrical connection switch-over means (15) are of electronic type or use static switches.

7. A device as claimed in the preceding claims, **characterised in that** the electrical connection switch-over means (15) are a timed change-over switch.

8. A device as claimed in claim 2, **characterised in that** the control means (23) for the switch-over means are a control member for controlling the motor operation.

9. A device as claimed in claim 8, **characterised in that** the control member (23) is a logic circuit.

10. A device as claimed in claim 8, **characterised in that** the control member (23) is a control member of a machine or household electrical appliance in which the motor is mounted.

11. A device as claimed in claim 8, **characterised in that** the control member (23) is integrated into the electrical connection switch-over means (15), said member (23) and said switch-over means (15) being both positioned on the electric motor.

12. A device as claimed in claim 2, **characterised in that** the control means (23) and/or the switch-over means (15) are integrated into a connection member for the motor.

13. A device as claimed in claim 1, **characterised by** comprising means (23) for sensing the attainment of a particular predetermined operating condition of the motor in order to cause the switch-over means (15) to pass from their first to their second connection stage.

14. A device as claimed in claims 12 and 13, **characterised in that** the sensing means are the motor control means (23).

15. A method for obtaining a temporary increase in the starting characteristics of a single-phase electric induction motor by using the device claimed in claim 1, said motor being connected to an electrical supply source such as a fixed supply mains and comprising a stator (S) having a main winding (1) and an auxiliary winding (2), there being provided a capacitor (3) always connected to one end (1B) of the main winding (1), and to a first end (17B) of the auxiliary winding (2), said auxiliary winding (2) comprising a second end (17), said method being **characterised by** comprising the following steps:
a) on starting the motor, connecting the second end (17) of the auxiliary winding (2) directly to the electrical supply source to achieve a high mechanical torque/rpm characteristic for the motor;
b) after a predetermined time period, disconnecting said second end (17) of the auxiliary winding (2) from the electrical supply source; and
c) connecting said second end (17) of the auxiliary winding (2) in parallel with the connection (3).

16. A method as claimed in claim 15, **characterised in that** the step of disconnecting the second end (17) of the auxiliary winding (2) of the stator (S) is implemented after a time period required for the motor to attain a suitable percentage of the normal working speed, preferably between 70% and 80% thereof.

17. A method as claimed in claim 15, **characterised in that** the step of connecting the second end (17) of the auxiliary winding (2) of the stator (S) in parallel with the capacitor is implemented when it is sensed that no residual currents exist through said winding (2) after its disconnection from the electrical supply source.

18. A dishwasher comprising a pump provided with an electric motor connected to a device in accordance with claim 1.
